# EUROPÄISCHE PATENTSCHRIFT

(11) **EP 2 106 437 B1**
(45) Veröffentlichungstag und Bekanntmachung des Hinweises auf die Patenterteilung: **02.05.2012**
(21) Anmeldenummer: 07820287.6
(22) Anmeldetag: 18.09.2007
(51) Int. Cl.: C11D 3/08, C11D 3/10, C11D 3/37, C11D 3/39, C11D 3/06, B01J 31/18, B01J 31/22, C11D 3/04

(54) **BLEICHKATALYSATORGRANULAT**
GRANULATED BLEACHED CATALYSTS
GRANULÉS DE CATALYSEUR DE BLANCHIMENT

(30) Priorität: 27.11.2006 DE 102006056248; 22.08.2007 DE 102007039651
(43) Veröffentlichungstag der Anmeldung: 07.10.2009
(73) Patentinhaber: Henkel Kommanditgesellschaft auf Aktien, 40589 Düsseldorf (DE)
(72) Erfinder: HOLDERBAUM, Thomas, 40723 Hilden (DE); RICHTER, Bernd, 42799 Leichlingen (DE); ZIPFEL, Johannes, 40593 Düsseldorf (DE)
(86) Internationale Anmeldenummer: PCT/EP2007/059823
(87) Internationale Veröffentlichungsnummer: WO 2008/064935

(56) Entgegenhaltungen:
- EP-A- 0 544 440
- WO-A-98/11187
- WO-A-03/066793
- DE-A1- 19 530 786

## Beschreibung

Die vorliegende Anmeldung hat Verfahren zur Herstellung um Bleichaktivatorgranulaten zum Gegenstand.

An maschinell gespültes Geschirr werden heute häufig höhere Anforderungen gestellt als an manuell gespültes Geschirr. So wird auch ein auf den ersten Blick von Speiseresten völlig gereinigtes Geschirr dann als nicht einwandfrei bewertet, wenn es nach dem maschinellen Geschirrspülen noch Verfärbungen aufweist, die beispielsweise auf der Anlagerung pflanzlicher Farbstoffe auf der Geschirroberfläche beruhen.

Um fleckenloses Geschirr zu erhalten, werden in maschinellen Geschirrspülmitteln Bleichmittel eingesetzt. Zur Aktivierung dieser Bleichmittel und um beim Reinigen bei Temperaturen von 60 °C und darunter eine verbesserte Bleichwirkung zu erreichen, enthalten maschinelle Geschirrspülmittel in der Regel weiterhin Bleichaktivatoren oder Bleichkatatysatoren, wobei sich insbesondere die Bleichkatalysatoren als besonders wirkungsvoll erwiesen haben.

Bleichkatalysatoren werden in maschinellen Geschirrspülmitteln vorzugsweise in Form vorgefertigter Granulate eingesetzt. So beschreiben die europäischen Patente EP 458 397 B1 (Unilever), EP 458 398 B1 (Unilever) und EP 530 870 B1 (Unilever) Bleichkatalysatoren auf Grundlage verschiedener Mangan-haltiger Übergangsmetallkomplexe.

Verfahren zur Herstellung von Bleichkatalysatorgranulaten werden in den Offenlegungsschriften EP 544 440 A2 (Unilever) und WO 95/06710 A1 (Unilever) offenbart. Kennzeichnend für die dort beschriebenen Verfahren ist der Einsatz großer Mengen Bindemittel, die gegebenenfalls als Schmelzen eingesetzt werden, wobei dieses Verfahrensweise Kühl- und/oder Trocknungsstufen einschließt, welche den Einsatz zusätzlicher Apparate wie Wirbelschichtanlagen bedingt

Sowohl die Granulate selbst als auch die zur ihrer Herstellung eingesetzten Verfahren können für den Fachmann jedoch noch nicht als in jeder Beziehung befriedigend bezeichnet werden. Zum einen zeichnen sich Bleichaktivatorgranulate häufig durch eine unerwartet geringe Aktivität aus, zum anderen geht die Herstellung dieser Granulate mit einer Kontamination der eingesetzten Apparaturen durch Obergarigsmetall-haltige Stäube einher, welche in der Nachfolge eine aufwändige Reinigung dieser Apparaturen und eine kostenintensive Entsorgung anfallender Filterstäube notwendig macht.
Der vorliegenden Anmeldung lag daher die Aufgabe zugrunde, Bleichaktivatorgranulate bereitzustellen, die sich gegenüber herkömmlichen Granulaten durch eine erhöhte Leistung, eine vereinfachte Herstellbarkelt und verbesserte Verarbeitbarkeit auszeichnen. In Bezug auf die Herstellung dieser Granulate sollte insbesondere das Problem des Wirkstoffaustrags aus den zur Herstellung eingesetzten Apparaturen und der Kontamination dieser Apparaturen im Verlaufe des Hersteltverfahrens gelöst werden.

Als in Bezug auf ihre Leistungsfähigkeit und Lagerstabilität besonders vorteilhaft haben sich Bleichkatalysatorgranulate erwiesen, die bezogen auf das Gesamtgewicht des Granulats
a) 0,1 bis 30 Gew.-% eines Bleichkatalysators
b) zwischen 40 und 95 Gew.-% eines Trägermaterial
c) 0,1 bis 6 Gew.-% eines Bindemittels aus der Gruppe der organischen Polymere enthalten,
   wobei die Bleichkatalysatorgranulate erhalten werden durch eln Verfahren, bei welchem ein Bleichkatalysator, ein Trägermaterial und ein Bindemittel aus der Gruppe der organischen Polymere in einem Mischer miteinander in Kontakt gebracht und granuliert werden, dadurch gekennzeichnet, dass
   a) das Trägermaterial in einem Mischer vorgelegt wird, wobei das Trägermaterial mehr als 70 Gew.-% Carbonat(e) und Silikat(e) enthält und das Gewichtsverhältnis von Carbonat zu Silikat im Bereich von 10:1 bis 1:10 liegt und
   b) eine Lösung oder eine Suspension, umfassend Bleichkatalysator und Bindemittel, aufgedüst wird.

Gegenstand der vorliegenden Erfindung ist daher ein Verfahren zur Herstellung dieser Bleichkatalysatorgranulate.

Als Bleichkatalysatoren werden im Rahmen der vorliegenden Anmeldung bleichverstärkende übergangsmetalisatze bzw. übergangsmetallkomplexe wie beispielsweise Mn-, Fe-, Co-, Ru - oder Mo-Salenkomplexe oder -carbonylkomplexe bezeichnet. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.

Mit besonderem Vorzug werden Komplexe des Mangans in der Oxidationsstufe II, III, IV oder IV eingesetzt, die vorzugsweise einen oder mehrere makrocyclische(n) Ligand(en) mit den Donorfunktionen N, NR, PR, O und/oder S enthalten. Vorzugsweise werden Liganden eingesetzt, die Stickstoff-Donorfunktionen aufweisen. Dabei ist es besonders bevorzugt, Bleichkatalysator(en) in den erfindungsgemäßen Mitteln einzusetzen, welche als makromolekularen Liganden 1,4,7-Trimethyl-1,4,7-triazacyclononan (Me-TACN), 1,4,7-Triazacyclononan (TACN), 1,5,9-Trimethyl-1,5,9-triazacyclododecan (Me-TACD), 2-Methyl-1,4,7-trimethyl-1,4,7-triazacyclononan (Me/Me-TACN) und/oder 2-Methyl-1,4,7-triazacyclononan (Me/TACN) enthalten. Geeignete Mangankomplexe sind beispielsweise [Mn^{III}₂(µ-O)1₍µ-OAc)₂(TACN)₂](ClO₄)₂, [Mn^{III}Mn^{IV}(µ-O)₂(µ-OAc)₁(TACN)₂](BPh₄)₂, [Mn^{IV}₄(µ-O)₆(TACN)₄](ClO₄)₄, [Mn^{III}(µ-O)₁(µ-OAc)₂(Me-TACN)₂](ClO₄)₂, [Mn^{III}Mn^{IV}(µ-O)₁(µ-OAc)₂(Me-TACN)₂(ClO₄)3, [Mn^{IV}₂(µ-O)₃(Me-TACN)₂](PFₑ)₂ und [Mn^{IV}₂(µ-O)₃(Me/Me-TACN)₂](PF₆)₂ (OAc = OC(O)CH₃).

Bevorzugte Bleichkatalysatorgranulate, sind dadurch gekennzeichnet, dass der Bleichkatalysator a) ausgewählt ist aus der Gruppe der bleichverstarkende Übergangsmetallsalze und Übergangsmetallkomplexe, vorzugsweise der Mn-, Fe-, Co-, Ru - oder Mo-komplexe, besonders bevorzugt aus der Gruppe der Mangan und/oder Cobaltsalze und/oder -komplexe, insbesondere der Cobalt-(ammin)-Komplexe, der Cobalt(acetat)-Komplexe, der Gobalt(Carbonyl)-Komplexe, der Chloride des Cobalts oder Mangans, des Mangansulfats und der Komplexe des Mangans mit 1,4,7-trimethyl-1,4,7-triazacyclononan (Me₃-TACN) oder 1,2, 4,7-tetramelhyl-1,4,7-triazacyclononan (Me₄-TACN).

Der Gewichtsanteil des Bleichkatalysators a) am Gesamtgewicht des Granulats beträgt bei erfindungsgemäß bevorzugten Bleichaktivatorgranulaten 0,1 bis 20 Gew.-%, vorzugsweise 0,2 bis 10 Gew.-% und insbesondere 0,5 bis 7 Gew.-%.

Neben dem Bleichkatalysator a) enthalten erfindungsgemäße Granulate als weiteren Inhaltsstoff, ein Trägermaterial b) das mehr als 70 Gew.-% Cartonat(e) und Silikate(e) enthält. Als zusätzliches Tragermaterial eignen sich weitesten alle in Wasch- oder Reinigungsverfahren ersetzbaren und mit den obrigen Inhaltstoffen kompatiblen Substanzen oder substanzgemische, insbesondere Sulfate, Chloride und Phosphate

Als Trägermaterial eignen sich beispielsweise Alkalimetallcarbonate, Alkalimetallhydrogencarbonate, Alkalimetallsesquicarbonake, die genannten Alkalisilikate, Alkalimetasilikate, und Mischungen der vorgenannten Stoffe, wobei im Sinne dieser Erfindung bevorzugt die Alkallcarbonate, insbesondere Natriumcarbonat, Natriumhydrogencarbonat oder Natriumsesquicarbonat eingesetzt werden.

Die Carbonat-und Silikat-haltigen Granulate haben sich in Bezug auf die Lagerstabilität und Lagerfähigkeit besonders vorteilhaft erwiesen.

Die resultierenden Carbonat- und Silikat-haltigen Granulate zeichnen sich im Vergleich zu Granulaten, die nur einen der beiden Trägermaterialien enthalten, durch eine erhöhte Rieselfahigkeit und verbesserte Tablettiereigenschaften aus.

Die vorteilhaften Eigenschaften der erfindungsgemäß herstellbaren Bleichkatalysatorgranulate en mit zunehmendem Gehalt an Carbonaten und Silikaten zu. Erfindungsgemäße Verfahren sind dadurch gekennzeichnet, dass das Trägermaterial mehr als 70 Gew.-% Carbonat(e) und Silikat(e) enthält. Besonders bevorzugt werden weiterhin solche Verfahren bei denen das Trägermaterial ausschließlich Carbonat(e) und Silikat(e) enthält.

Das Gewichtsverhältnis von Carbonat zu Silikat liegt im Bereich von 10:1 bis 1:10, bevorzugt von 5:1 bis 1:5, besonders bevorzugt von 3:1 bis 1:3 und insbesondere von 1,5:1 bis 1:1,5.

Bevorzuge Verfahren zur Herstellung von Bleichkatalysatorgranulate sind dadurch gekennzeichnet, dass das Trägermaterial zwischen 10 und 90 Ges.-%, vorzugsweise zwischen 20 und 80 Gew.-% und insbesondere zwischen 40 und 70 Gew.-% Carbonat(e) enthält. Als besonders bevorzugtes Carbonat wird Natriumcarbonat eingesetzt. Verfahren dadurch gekennzeichnet, dass das Trägermaterial Natriumcarbonat enthält, werden daher besonders bevorzugt.

Bevorzugt werden weiterhin solche Verfahren zur Herstellung von Bleichkatalysatorgranulat, bei denen das Trägermaterial zwischen 10 und 90 Gew.-%, vorzugsweise zwischen 20 und 80 Gew.-% und Insbesondere zwischen 30 und 60 Gew.-% Silikat(e) enthält.

Bevorzugte Verfahren sind dadurch gekennzeichnet, dass das Granulat zwischen 5 und 50 Gew.-%, vorzugsweise zwischen 10 und 40 Gew.-% und insbesondere zwischen 15 und 30 Ges.-% Silikat enthalt.

Zusammenfassend werden damit solche Verfahren zur Herstellung von bleichkatalysatorgranulaten bevorzugt, bei denen, bezogen auf das Gesamtgewicht des Granulats,
a) 0,1 bis 30 Gew.-% eines Bleichkatalysators
b) zwischen 40 und 95 Gew.-% eines Trägermaterials, welches 40 bis 70 Gew.-% Natriumcarbonat und 40 bis 70 Gew.-% Silikat(e) enthält.
c) 0,1 bis 5 Gew.-% eines Bindemittels aus der Gruppe der organischen Polymere, in einem Mischer miteinander in Xontakt gebracht und granuliert werden.

In Kombination mit den Carbonat- und Silikat-haltigen Trägermaterialien werden vorzugsweise Bindemittel aus der Gruppe der anionischen Polymere eingesetzt, wobei homo- oder copolymere Polycarboxylate insbesondere homo- oder copolymere Polyacrylate bzw. homo- oder copolymere Polymethacrylate besonders bevorzugt sind. Geeignet sind ebenfalls Lösungen bzw. Dispersionen von Saccharide oder Polysaccharide.

Ein weiterer bevorzugter Gegenstand dieser Anmeldung sind daher solche Verfahren, bei denen, bezogen auf das Gesamtgewicht des Granulats,
a) 0,1 bis 30 Gew.-% eines Bleichkatalysators
b) zwischen 40 und 95 Gew.-% eines Trägermaterials, welches 40 bis 70 Gew.-% Natriumcarbonat und 40 bis 70 Gew.-% Silikat(e) enthält.
c) 0,1 bis 5 Gew.-% eines Bindemittels aus der Gruppe der homo- oder copolymeren Polyacrylate bzw. homo- oder copolymeren Polymethacrylate, in einem Mischer miteinander in Kontakt gebracht und granuliert werden

Der Gewichtsanteil des Trägermaterials b) am Gesamtgewicht der Bleichkatalysatorgranulate kann in eingangs angegebenen Grenzen variiert werden, wobei sich hinsichtlich der Verarbeitbarkeit und der tatsächlichen Bleichleistung nach der Konfektionierung mit weiteren wasch- und reinigungsaktiven Inhallsstoffen Gewichtsanteile oberhalb 40 Ges.-% und insbesondere oberhalb 60 Gew.-% als vorteilhaft erwiesen haben.

Folglich werden im Rahmen der vorliegenden Anmeldung Verfahren bevorzugt, bei denen der Gewichtsanteil des Trägermaterials b) am Gesamtgewicht des Granulats zwischen 60 und 90 Gew.-% beträgt.

Als dritten Inhaltsstoff enthalten die erfindungsgemäßen Bleichaktivatorgranulate ein Bindemittel c) aus der Gruppe der organischen Polymere. Die Polymere können nichtionischer, anionscher, kationischer oder amphoterer Natur sein. Natürliche Polymere und modifizierte Polymere natürlichen Ursprungs sind ebenso einsetzbar wie synthetische Polymere

Zur Gruppe der mit besonderem Vorzug als Bindemittel eingesetzten nichtionischen Polymere zählen Polyvinylalkohole, acetalisierte Polyvinylalkohole, Polyvinylpyrrolidone und Polyalkylenglykole, insbesondere Polyethylenoxide. Bevorzugte Polyvinylalkohole und acetalisierte Polyvinylalkohole weisen Molekulargewicht im Bereich von 10.000 bis 100.000 gmol⁻¹, vorzugsweise von 11.000 bis 90.000 gmol⁻¹, besonders bevorzugt von 12.000 bis 60.000 gmol⁻¹ und insbesondere von 13.000 bis 70.000 gmol⁻¹ auf. Bevorzugte Polyethylenoxide haben Molmassen im Bereich von ca. 200 bis 5.000.000 g/mol, entsprechend Polymerisationsgraden n von ca. 5 bis >100.000.

Bei den mit besonderem Vorzug als Bindemittel eingesetzten anionischen Polymeren handelt es sich insbesondere um homo oder copolymere Polycarboxylate. Bevorzugt eingesetzt werden beispielsweise Polyacrylsäure oder der Polymethacrylsäure, insbesondere solche mit einer relativen Molekülmasse von 500 bis 70000 g/mol.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Bevorzugte erfindungsgemäße Verfahren sind dadurch gekennzeichnet, dass das Bindemittel c) ausgewählt ist aus der Gruppe der wasserlöslichen Homo- und/oder Copolymere, vorzugsweise der Homo- und/oder Copolymere der Acrylsäure oder Methacrylsäure.

Zur Verbesserung der Wasserlöslichkeit können die Polymere auch Allylsulfonsäuren, wie beispielsweise Allyloxybenzolsulfonsäure und Methallylsulfonsäure, als Monomer enthalten. Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Weitere bevorzugte Copolymere sind solche, die als Monomere Acrolein und Acrylsäure/Acrylsäuresalze bzw. Acrolein und Vinylacetat aufweisen.

Weitere mit Vorzug als Bindemittel eingesetzte anionische Polymere sind Sulfonsäuregruppenhaltige Polymere, insbesondere Copolymere aus ungesättigten Carbonsäuren, Sulfonsäuregruppen-haltigen Monomeren und gegebenenfalls weiteren ionogenen oder nichtionogenen Monomeren.

### Bevorzugt werden insbesondere Copolymere aus

i) ungesättigten Carbonsäuren der Formel R¹(R²)C=C(R³)COOH, in der R¹ bis R³ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist,
ii) Sulfonsäuregruppen-haltigen Monomeren der Formel. R⁵(R⁶)C=C(R⁷)-X-SO₃H in der R⁵ bis R⁷ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl-oder Alkenylreste wie vorstehend definiert oder für -COOH oder -COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-
iii) gegebenenfalls weiteren ionogenen oder nichtionogenen Monomeren.

Die Monomerenverteilung der zuvor beschriebenen erfindungsgemäß bevorzugt eingesetzten Sulfonsäuregruppen-haltigen Copolymeren beträgt bei Copolymeren, die nur Monomere aus den Gruppen i) und ii) enthalten, vorzugsweise jeweils 5 bis 95 Gew.-% i) bzw. ii), besonders bevorzugt 50 bis 90 Gew.-% Monomer aus der Gruppe i) und 10 bis 50 Gew.-% Monomer aus der Gruppe ii), jeweils bezogen auf das Polymer. Bei Terpolymeren sind solche besonders bevorzugt, die 20 bis 85 Gew.-% Monomer aus der Gruppe i), 10 bis 60 Gew.-% Monomer aus der Gruppe ii) sowie 5 bis 30 Gew.-% Monomer aus der Gruppe iii) enthalten.

Die Molmasse der erfindungsgemäß bevorzugt eingesetzten Sulfo-Copolymere kann variiert werden, wobei bevorzugte Copolymere Molmassen von 2000 bis 200.000 gmol⁻¹, vorzugsweise von 4000 bis 25.000 gmol⁻¹ und insbesondere von 5000 bis 15.000 gmol⁻¹ aufweisen. Kationische Polymere im Sinne der vorliegenden Erfindung sind Polymere, welche eine positive Ladung im Polymermolekül tragen. Diese kann beispielsweise durch in der Polymerkette vorliegende (Alkyl-)Ammoniumgruppierungen oder andere positiv geladene Gruppen realisiert werden. Besonders bevorzugte kationische Polymere stammen aus den Gruppen der quatemierten Cellulose-Derivate, der Polysiloxane mit quaternären Gruppen, der kationischen Guar-Derivate, der polymeren Dimethyldiallylammoniumsalze und deren Copolymere mit Estern und Amiden von Acrylsäure und Methacrylsäure, der Copolymere des Vinylpyrrolidons mit quatemierten Derivaten des Dialkylaminoacrylats und -methacrylats, der Vinylpyrrolidon-M-ethoimidazoliniumchlorid-Copolymere, der quaternierter Polyvinylalkohole oder der unter den INCI-Bezeichnungen Polyquaternium 2, Polyquaternium 17, Polyquaternium 18 und Polyquaternium 27 angegeben Polymere.

Amphotere Poylmere im Sinne der vorliegenden Erfindung weisen neben einer positiv geladenen Gruppe in der Polymerkette weiterhin auch negativ geladenen Gruppen bzw. Monomereinheiten auf. Bei diesen Gruppen kann es sich beispielsweise um Carbonsäuren, Sulfonsäuren oder Phosphonsäuren handeln.

Bevorzugte kationische oder amphotere Polymere weisen eine Monomereinheit der Formel R¹R²C=CR³R⁴ auf, in der jeder Rest R¹ R², R³, R⁴ unabhängig voneinander ausgewählt ist aus Wasserstoff, derivatisierter Hydroxygruppe, C₁₋₃₀ linearen oder verzweigten Alkylgruppen, Aryl, Aryl substitutierten C₁₋₃₀ linearen oder verzweigten Alkylgruppen, polyalkoyxylierte Alkylgruppen, heteroatomaren organischen Gruppen mit mindestens einer positiven Ladung ohne geladenen Stickstoff, mindestens ein quatemiertes N-Atom oder mindestens eine Aminogruppe mit einer positiven Ladung im Teilbereich des pH-Bereichs von 2 bis 11, oder Salze hiervon, mit der Maßgabe, dass mindestens ein Rest R¹ R², R³, R⁴ eine heteroatomare organische Gruppe mit mindestens einer positiven Ladung ohne geladenen Stickstoff, mindestens ein quaterniertes N-Atom oder mindestens eine Aminogruppe mit einer positiven Ladung ist.

Im Rahmen der vorliegenden Anmeldung besonders bevorzugte kationische oder amphotere Polymere enthalten als Monomereinheit eine Verbindung der allgemeinen Formel 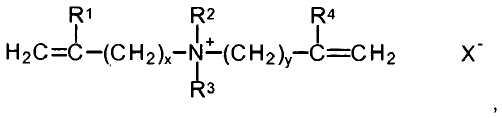 bei der R¹ und R⁴ unabhängig voneinander für H oder einen linearen oder verzweigten Kohlenwasserstoffrest mit 1 bis 6 Kohlenstoffatomen steht; R² und R³ unabhängig voneinander für eine Alkyl-, Hydroxyalkyl-, oder Aminoalkylgruppe stehen, in denen der Alkylrest linear oder verzweigt ist und zwischen 1 und 6 Kohlenstoffatomen aufweist, wobei es sich vorzugsweise um eine Methylgruppe handelt; x und y unabhängig voneinander für ganze Zahlen zwischen 1 und 3 stehen. X repräsentiert ein Gegenion, vorzugsweise ein Gegenion aus der Gruppe Chlorid, Bromid, Iodid, Sulfat, Hydrogensulfat, Methosulfat, Laurylsulfat, Dodecylbenzolsulfonat, p-Toluolsulfonat (Tosylat), Cumolsulfonat, Xylolsutfonat, Phosphat, Citrat, Formiat, Acetat oder deren Mischungen.

Bevorzugte Reste R¹ und R⁴ in der vorstehenden Formel sind ausgewählt aus -CH₃, -CH₂-CH₃, - CH₂-CH₂-CH₃, -CH(CH₃)-CH₃, -CH₂-OH, -CH₂-CH₂-OH, -CH(OH)-CH₃, -CH₂₋CH₂₋CH₂-OH, -CH₂-CH(OH)-CH₃, -CH(OH)-CH₂-CH₃, und -(CH₂CH₂-O)ₙH.

Ganz besonders bevorzugt werden Polymere, welche eine kationische Monomereinheit der vorstehenden allgemeinen Formel aufweisen, bei der R¹ und R⁴ für H stehen, R² und R³ für Methyl stehen und x und y jeweils 1 sind. Die entsprechende Monomereinheit der Formel 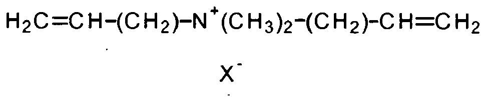 wird im Falle von X= Chlorid auch als DADMAC (Diallyldimethylammonium-Chlorid) bezeichnet.

Weitere besonders bevorzugte kationische oder amphotere Polymere enthalten eine Monomereinheit der allgemeinen Formel 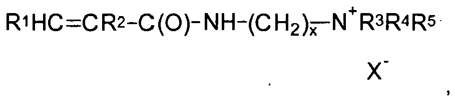 in der R¹, R², R³, R⁴ und R⁵ unabhängig voneinander für einen linearen oder verzweigten, gesättigten oder ungesättigten Alkyl-, oder Hydroxyalkylrest mit 1 bis 6 Kohlenstoffatomen, vorzugsweise für einen linearen oder verzweigten Alkylrest ausgewählt aus -CH₃, -CH₂-CH₃, -CH₂-CH₂-CH₃, -CH(CH₃)-CH₃, -CH₂-OH, -CH₂-CH₂-OH, -CH(OH)-CH₃, -CH₂-CH₂-CH₂-OH, -CH₂-CH(OH)-CH₃, -CH(OH)-CH₂-CH₃, und -(CH₂CH₂-O)ₙH steht und x für eine ganze Zahl zwischen 1 und 6 steht.

Ganz besonders bevorzugt werden im Rahmen der vorliegenden Anmeldung Polymere, welche eine kationsche Monomereinheit der vorstehenden allgemeinen Formel aufweisen, bei der R¹ für H und R², R³, R⁴ und R⁵ für Methyl stehen und x für 3 steht. Die entsprechenden Monomereinheiten der Formel 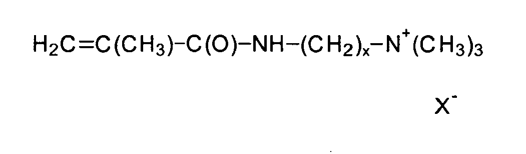 werden im Falle von X⁻= Chlorid auch als MAPTAC (Methyacrylamidopropyl-trimethylammoniumChlorid) bezeichnet.

Erfindungsgemäß bevorzugt werden Polymere eingesetzt, die als Monomereinheiten Diallyldimethylammoniumsalze und/oder Acrylamidopropyltrimethylammoniumsalze enthalten.

Die zuvor erwähnten amphoteren Polymere weisen nicht nur kationische Gruppen, sondern auch anionische Gruppen bzw. Monomereinheiten auf. Derartige anionischen Monomereinheiten stammen beispielsweise aus der Gruppe der linearen oder verzweigten, gesättigten oder ungesättigten Carboxylate, der linearen oder verzweigten, gesättigten oder ungesättigten Phosphonate, der linearen oder verzweigten, gesättigten oder ungesättigten Sulfate oder der linearen oder verzweigten, gesättigten oder ungesättigten Sulfonate. Bevorzugte Monomereinheiten sind die Acrylsäure, die (Meth)acrylsäure, die (Dimethyl)acrylsäure, die (Ethyl)acrylsäure, die Cyanoacrylsäure, die Vinylessingsäure, die Allylessigsäure, die Crotonsäure, die Maleinsäure, die Fumarsäure, die Zimtsäure und ihre. Derivate, die Allylsulfonsäuren, wie beispielsweise Allyloxybenzolsulfonsäure und Methallylsulfonsäure oder die Allylphosphonsäuren.

Bevorzugte einsetzbare amphotere Polymere stammen aus der Gruppe der Alkylacrylamid/Acrylsäure-Copolymere, der Alkylacrylamid/Methacrylsäure-Copolymere, der Alkylacrylamid/Methylmethacrylsäure-Copolymere, der Alkylacrylamid/Acrylsäure/Alkyl-aminoalkyl(meth)crylsäure-Copolymere, der Alkylacrylamid/Methacrylsäure/Alkylaminoalkyl(meth)-acrylsäure-Copolymere, der Alkylacrylamid/Methylmethacrylsäure/Alkylaminoalkyl(meth)crylsäure-Copolymere, der Alkylacrylamid/Alkymethacrylat/Alkylaminoethylmethacrylat/Alkylmethacrylat-Copolymere sowie der Copolymere aus ungesättigten Carbonsäuren, kationisch derivatisierten ungesättigten Carbonsäuren und gegebenenfalls weiteren ionischen oder nichtionogenen Monomeren.

Bevorzugt einsetzbare zwitterionische Polymere stammen aus der Gruppe der Acrylamidoalkyltrialkylammoniumchlorid/Acrylsäure-Copolymere sowie deren Alkali- und Ammoniumsalze, der Acrylamidoalkyltrialkylammoniumchlorid/Methacrylsäure-Copolymere sowie deren Alkali- und Ammoniumsalze und der Methacroylethylbetain/Methacrylat-Copolymere,

Bevorzugt werden weiterhin amphotere Polymere, welche neben einem oder mehreren anionischen Monomeren als kationische Monomere Methacrylamidoalkyl-trialkylammoniumchlorid und Dimethyl(diallyl)ammoniumchlorid umfassen.
Besonders bevorzugte amphotere Polymere stammen aus der Gruppe der Methacrylamidoalkyl-trialkylammoniumchlorid/Dimethyl(diallyl)ammoniumchlorid/Acrylsäure-Capolymere, der Methacrylamidoalkyltrialkylammoniumchlorid/Dimethyl(diallyl)ammoniumchlorid/Methacrylsäure-Copolymere und der Methacrylamidoalkyltrialkylammoniumchlorid/Dimethyl(diallyl)ammoniumchlorid/Alkyl-(meth)acrylsäure-Copolymere sowie deren Alkali- und Ammoniumsalze.
Insbesondere bevorzugt werden amphotere Polymere aus der Gruppe der Methacrylamidopropyltrimethylammoniumchlorid/Dimethyl(diallyl)ammoniumchlorid/Acrylsäure-Copolymere, der Methacrylamidopropyltrimethylammoniumchlorid/Dimethyl(diallyl)ammonium-chlorid/Acrylsäure-Copolymere und der Methacrylamidopropyltrimethylammonium-chlorid/Dimethyl(diallyl)ammoniumchlorid/- Alkyl(meth)acrylsäure-Copolymere sowie deren Alkali- und Ammoniumsalze.

In erfindungsgemäß bevorzugt hestellbaren Bleichkatalysatorgranulaten beträgt der Gewichtsanteil des Bindemittels c) am Gesamtgewicht des Granulats zwischen 0,2 und 4,5 Ges.-%. bevorzugt zwischen 0,5 und 4,0 Gew.-% und insbesondere zwischen 1,0 und 4,0 Gew.-%.

Die erfindungsgemäß hesgestellten Bleichaktivatorgranulate zeichnen sich gegenüber Granulaten mit einem höheren Gewichtsanteil an Bindemittel in maschinellen Geschirrspalverfahren bei gleichen Einsatzmengen durch eine erhöhte Bleichwirkung aus.

Erfindungsgemäß bevorzugt herstellbare Bleichkatalysatorgranulate enthalten mindestens einen Farbstoff. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber den mit den farbstoffhaltigen Mitteln zu behandelnden Substraten wie beispielsweise Textilien, Glas, Keramik oder Kunststoffgeschirr, um diese nicht anzufärben.

Bei der Wahl des Färbemittels muss beachtet werden, dass die Färbemittel eine hohe Lagerstabilität und Unempfindlichkeit gegenüber Licht aufweisen Gleichzeitig ist auch bei der Wahl geeigneter Färbemittel zu berücksichtigen, dass Färbemittel unterschiedliche Stabilitäten gegenüber Oxidation aufweisen. Im Allgemeinen gilt, dass wasserunlösliche Färbemittel gegen Oxidation stabiler sind als wasserlösliche Färbemilttel. Abhängig von der Löslichkeit und damit auch von der Oxidationsempfindlichkeit variiert die Konzentration des Färbemittels in den Wasch- oder Reinigungsmitteln. Bei gut wasserlöslichen Färbemitteln werden typischerweise Färbemittel-Konzentrationen im Bereich von einigen 10⁻² bis 10⁻³ Gew.-% gewählt. Bei den auf Grund ihrer Brillanz Insbesondere bevorzugten, allerdings weniger gut wasserlöslichen Pigmentfarbstoffen liegt die geeignete Konzentration des Farbmittels in Wasch- oder Reinigungsmitteln dagegen typischerweise bei einigen 10⁻³ bis 10⁻⁴ Gew.-%.

Es werden Färbemittel bevorzugt, die im Waschprozess oxidativ zerstört werden können sowie Mischungen derselben mit geeigneten blauen Farbstoffen, sog. Blautönern. Es hat sich als vorteilhaft erwiesen, Färbemittel einzusetzen, die in Wasser oder bei Raumtemperatur in flüssigen organischen Substanzen löslich sind, Geeignet sind beispielsweise anionische Färbemittel, z.B. anionische Nitrosofarbstoffe.

Die erfindungsgemäß hergestellten Bleichaktivatorgranulate können neben den vorgenannten Inhaltsstoffe a) bis c) und den Farbstoffen selbstverständlich noch weitere Prozesshilfsmittel oder wasch- oder reinigungsaktive Inhaltsstoffe enthalten, beispielsweise Bleichaktivatoren oder organische Phosphonate enthalten. Genauere Angaben zu diesen und weiteren wasch- oder reinigungsaktiven Substanzen finden sich weiter unten in der Beschreibung.

Kennzeichnend für die erfindungsgemäß hergestellten Bleichaktivatorgranulate ist in erster Linie ihre chemische Zusammensetzung. Gleichwohl hat es sich enviesen, dass die Bleichwirkung dieser Granulate auch über die Beeinflussung physikalischer Parameter wie beispielsweise der Teilchengröße, des Feinanteils sowie des Bleichkatalysatorgehalts ausgewählter Slebfraktionen vorteilhaft beeinflusst werden kann.

Bevorzugt herstellbare Bleichkalalysatorgranulate sind aus diesem Grund dadurch gekennzeichnet, dass das Granulat eine mittlere Teilchengröße zwischen 0,1 und 1,0 mm, vorzugsweise zwischen 0,2 und 0,8 mm und insbesondere zwischen 0,3 und 0,7 mm besitzt.

In einer weiteren bevorzugten Ausführungsform beträgt der Gewichtsanteil der Teilchen mit einer Teilchengröße unterhalb 0,1 mm mindestens 4 Gew.-%, vorzugsweise mindestens 6 Gew.-% und insbesondere mindestens 8 Gew.%. Der Anteil der Teilchen mit einer Teilchengröße unterhalb 0,1 mm beträgt dabei vorzugsweise maximal 80 Gew.%, bevorzugt maximal 60 Gew.% und insbesondere maximal 40 Gew.%.

Schließlich ist es erfindungsgemäß bevorzugt, dass der Gewichtsanteil der Teilchen mit einer Teilchengröße zwischen 0,2 und 0,8 mm zwischen 30 und 70 Gew.-%, vorzugsweise zwischen 45 und 65 Gew.-% und Insbesondere zwischen 40 und 60 Gew.-% beträgt, wobei die Teilchen mit einer Teilchengröße zwischen 0,2 und 0,8 mm vorzugsweise einen Mangangehalt oberhalb 1600 mg/kg, bevorzugt oberhalb 2200 mg/kg und insbesondere oberhalb 2800 mg/kg aufweisen.

Mit steigendem Anteil der Teilchen unterhalb 0,1 mm konnte ebenso wie mit steigendem Mangangehalt in der Siebfraktion zwischen 0,2 und 0.8 mm bei gleich bleibendem Gesamtkatalysatorgehalt eine verstärkte Bleichleistung beobachtet werden.

Die erfindungsgemäß hergestellten Bleichkatalysatoren eignen sich für den Einsatz in jedweden Wasch- oder Reinigungsmitteln, wobei sich ihr Einsatz in maschinellen Geschirrspülmitteln als besonders vorteilhaft erwiesen hat

Bevorzugte Wasch- und Reinigungsmittel enthalten die erfindungsgemäß hergestellten Bleichaktivatorgranulate in Gewichtsanteilen zwischen 0,1 und 10 Gew.%, vorzugsweise in Gewichtsanteilen zwischen 0,2 und 8 Gew.% und insbesondere in Gewichtsanteilen zwischen 0,5 und 6 Gew.-%.

. Die Bezeichnung maschinelle Geschirrspülmittel umfasst feste wie flüssige Angebotsformen ebenso wie Mischformen aus Feststoffen und Flüssigkeiten, beispielsweise in Form von Dispersionen oder Angebotsformen, in denen Feststoff und Flüssigkeit getrennt voneinander innerhalb einer Dosiereinheit, zum Beispiel einem Mehrkammerbeutel, konfektioniert vorliegen.

Mit besonderem Vorzug sind die erfindungsgemäß hergestellten Bleichkatalysatorgranulate Bestandteil vorge-fertigter Dosiereinheiten zur Durchführung einzelner Reinigungsgänge. Derartige Dosiereinheiten weisen vorzugsweise ein Gewicht zwischen 8 und 30 g, bevorzugt zwischen 10 und 25 g und insbesondere zwischen 12 und 20 g auf. Das Volumen der Dosiereinheit liegt dabei üblicherweise im Bereich zwischen 5 und 40 ml, bevorzugt zwischen 8 und 30 ml und insbesondere zwischen 12 und 20 ml.

Die Dosiereinheit kann mittels einer Dosierhilfe oder aber durch einfaches Einbringen in den Innenraum einer Reinigungsmaschine, beispielsweise einer Geschirrspülmaschine, eingesetzt werden. Als Dosierhilfen sind dabei beispielsweise Netze oder Beutel ebenso denkbar wie Vorrichtungen, welche die Dosiereinheit zu einem gegebenen Zeitpunkt automatisch in den Innenraum der Reinigungsmaschine abgeben. Zur Gruppe dieser automatischen Dosiersysteme zählen dabei auch die Dosierkammern automatischer Geschirrspülmaschinen.

Werden Dosierhilfen eingesetzt, so ist die Dosiereinheit in ihrer Raumform vorzugsweise den Abmessungen dieser Dosierhilfe angepasst. Besonders bevorzugte Dosiereinheiten werden durch Kompaktierung oder durch Konfektionierung fließfähiger Substanzgemische wie Flüssigkeiten oder schüttfähigen Feststoffen wie Pulvern, Granulaten oder Extrudaten in wasserlöslichen Behältnissen wie tiefgezogenen Beuteln oder durch Spritzguß bzw. Flaschenblasverfahren erstellten formstabilen Behältern erhalten.

Eine besonders bevorzugte Ausführungsform für eine solche Dosiereinheit ist die durch Verpressung eines teilchenförmigen Vorgemisches erhaltene Tablette.

Die Herstellung von Wasch- oder Reinigungsmitteltabletten erfolgt bevorzugt in dem Fachmann bekannter Weise durch Verpressung partikulärer Ausgangssubstanzen. Zur Herstellung der Tabletten wird das Vorgemisch in einer so genannten Matrize zwischen zwei Stempeln zu einem festen Komprimat verdichtet. Dieser Vorgang, der im Folgenden kurz als Tablettierung bezeichnet wird, gliedert sich in vier Abschnitte: Dosierung, Verdichtung (elastische Verformung), plastische Verformung und Ausstoßen. Die Tablettierung erfolgt dabei vorzugsweise auf so genannten Rundläuferpressen.

Bei der Tablettierung mit Rundläuferpressen hat es sich als vorteilhaft erwiesen, die Tablettierung mit möglichst geringen Gewichtschwankungen der Tablette durchzuführen. Auf diese Weise lassen sich auch die Härteschwankungen der Tablette reduzieren. Geringe Gewichtschwankungen können auf folgende Weise erzielt werden:
- Verwendung von Kunststoffeinlagen mit geringen Dickentoleranzen
- Geringe Umdrehungszahl des Rotors
- Große Füllschuhe
- Abstimmung des Füllschuhflügeldrehzahl auf die Drehzahl des Rotors
- Füllschuh mit konstanter Pulverhöhe
- Entkopplung von Füllschuh und Pulvenrorlage

Die zur Tablettierung vorgesehen Inhaltsstoffe können in Form eines gemeinsamen teilchenförmigen Vorgemisches zeitgleich oder in Form einzelner, separater Pulver oder Granulate zeitlich versetzt oder zeitgleich in die Matrize eingefüllt werden, wobei die Dosierung eines vorgefertigten teilchenförmigen Vorgemisches bevorzugt ist. Innerhalb dieses Vorgemisches kann es vor der Tablettierung, beispielsweise während der Lagerung oder im Verlaufe des Transports zur bzw. der Dosierung in die Matrize zu Entmischungserscheinungen kommen, als deren Folge die Wirkstoffkonzentration einzelner Inhaltsstoffe in dem resultierenden Komprimat variiert.

Bei Versuchen zur Tablettierung maschineller Geschirrspülmittel, welche die erfingdungsgemäß hergestellten Bleichaktivatorgranulate enthielten, konnte nun festgestellt werden, dass diese Granulate ein deutlich verbesserten Entmischungsverhalten aufweisen, weshalb die resultierenden Tabletten deutlich verringerte Konzentrationsschwankungen in Bezug auf ihren Gehalt an erfindungsgemaß hergestellten Bleichaktivatorgranulaten bzw. an Bleichaktivator aufwiesen. Diese vorteilhafte technische Eigenschaft ist insbesondere im Hinblick auf die in dem maschinellen Geschirrspülmittel enthaltenen kleinen Mengen an Bleichkatalysator von Bedeutung.

Zur Verminderung von Stempelanbackungen bieten sich sämtliche aus der Technik bekannte Antihaftbeschichtungen an. Besonders vorteilhaft sind Kunststoffbeschichtungen, Kunststoffeinlagen oder Kunststoffstempel. Auch drehende Stempel haben sich als vorteilhaft erwiesen, wobei nach Möglichkeit Ober- und Unterstempel drehbar ausgeführt sein sollten. Bei drehenden Stempeln kann auf eine Kunststoffeinlage in der Regel verzichtet werden. Hier sollten die Stempeloberflächen elektropoliert sein.

Im Rahmen der vorliegenden Erfindung bevorzugte Verfahren sind dadurch gekennzeichnet, dass die Verpressung bei Pressdrücken von 0,01 bis 50 kNcm⁻², vorzugsweise von 0,1 bis 40 kNcm⁻² und insbesondere von 1 bis 25 kNcm⁻² erfolgt.

Die einzelnen Phasen von zwei- oder mehrphasigen Tabletten sind vorzugsweise in Schichten angeordnet. Der Gewichtsanteil der kleinsten Phase beträgt, bezogen auf die gesamte Tablette vorzugsweise mindestens 5 Gew.-%, bevorzugt mindestens 10 Gew.-% und Insbesondere mindestens 20 Gew.-%. Der Gewichtsanteil der Phase mit dem höchsten Gewichtsanteil an der Tablette beträgt bei zweiphasigen Tabletten vorzugsweise nicht mehr als 90 Gew.%, bevorzugt nicht mehr als 80 Gew.-% und insbesondere zwischen 55 und 70 Gew.-%. Bei dreiphasigen Tabletten beträgt der Gewichtsanteil der Phase mit dem höchsten Gewichtsanteil an der Tablette vorzugsweise nicht mehr als 80 Gew.%, bevorzugt nicht mehr als 70 Gew.-% und insbesondere zwischen 40 und 60 Gew.%.

In einer weiteren bevorzugten Ausführungsform der Wasch- oder Reinigungsmittelformkörper ist der Aufbau der Tablette zwiebelschalenartig. In einer solchen Tablette ist mindestens eine innere Schicht von mindestens einer äußeren Schicht vollständig umgeben.

Der mehrphasige Aufbau der Dosiereinheit, beispielsweise des zuvor beschriebenen wasserlöslichen Mehrkammerbeutels oder der zwei- oder mehrphasigen Tablette dient vorzugsweise der Trennung von miteinander unverträglichen Inhaltsstoffen dieser Dosiereinheit.

Als in Bezug auf ihre Leistungsfähigkeit besonders vorteilhaft haben sich solche mehrphasigen Dosiereinheiten erwiesen, in denen die erfindungsgemäß hergestellten Bleichaktivatorgranulate von den Bleichmitteln und/oder den Silberschutzmitteln und/oder den Enzymen und/oder den Farbstoffen getrennt vorliegen.

In einer bevorzugten Ausführungsform sind die erfindungsgemäß hergestellten Bleichaktivatorgranulate in einer Phase der Dosiereinheit enthalten, die frei ist von Bleichmitteln und/oder Silberschutzmitteln und/oder Enzymen und/oder Farbstoffen. Lässt sich die gemeinsame Verarbeitung von Bleichaktivatorgranulaten und den vorgenannten Substanzen nicht vermeiden, so ist es bevorzugt, dass der Gewichtsanteil der Bleichmittel in dieser Phase jeweils weniger als 10 Gew.-%, vorzugsweise weniger als 8 Gew.-% und insbesondere weniger als 5 Gew.-% beträgt, während im Falle der Silberschutzmittel, Enzyme und Farbstoffe der jeweilige Gewichtsanteil dieser Inhaltsstoffe an der Phase weniger als 4 Gew.-%, vorzugsweise weniger als 2 Gew.%, bevorzugt weniger als 1 Gew.-% und Insbesondere weniger als 0,5 Gew.% beträgt.

Wie bereits zuvor beschrieben, zeichnen sich die erfindungsgemäß hergestellten Bleichkatalysatorgranulate außer durch eine verbesserte Herstellbarkeit und Verarbeitbarkeit weiterhin auch durch eine erhöhte Bleichaktivierung aus. Diese verbesserte Leistungsfähigkeit ist insbesondere in Bezug auf die Beseitigung hartnäckiger Anschmutzungen wie beispielsweise Teeanschmutzungen zu beobachten.

Die zuvor beschriebenen Mittel bzw. die nach dem zuvor beschriebenen Verfahren hergestellten Mittel enthalten wasch- oder reinigungsaktive Substanzen, vorzugsweise aus der Gruppe der Gerüststoffe, Tenside, Polymere, Bleichmittel, Bleichaktivatoren, Enzyme, Glaskorrosionsinhibitoren, Korrosionsinhibitoren, Desintegrationshilfsmittel, Duftstoffe und Parfumträger.

In den erfindungsgemäßen Verfahren erfolgt die Granulation vorzugsweise in einem Mischer oder Granulator mit Misch- und/oder Schneidwerkzeugen.

In einer alternativen Verfahrensvariante können auch Mischer oder Granulatoren ohne Mischwerkzeuge, beispielsweise Freifallmischer, vorzugsweise Trommelmischer, Taumelmischer, Konusmischer, Doppelkonusmischer oder V-Mischer eingesetzt werden.

Das Bindemittel wird in Form einer Lösung oder Suspension, vorzugsweise einer wässrigen Lösung oder Suspension, bevorzugt mit einem Gewichtsanteil des Bindemittels an der Lösung oder Suspension zwischen 10 und 90 Gew.-%, besonders bevorzugt zwischen 15 und 70 Gew.% und insbesondere zwischen 20 und 50 Gew.% eingesetzt.

Zum Aufbringen des Bindemittels eignen sich insbesondere Sprühvorrichtungen. Das Besprühen kann mittels Einstoff- bzw. Hochdrucksprühdüsen, Zweistoffsprühdüsen oder Dreistoffsprühdüsen erfolgen. Zum Versprühen mit Einstoffsprühdüsen ist die Anwendung eines hohen Massedruckes (5-15 MPa) erforderlich, während das Versprühen in zweistoffsprühdüsen mit Hilfe eines Preßluftstrormes (bei 0,15-0,3 MPa) erfolgt. Die Versprühung mit Zweistoffsprühdüsen ist besonders im Hinblick auf eventuelle Verstopfungen der Düse günstiger, aber durch den hohen Preßluftverbrauch aufwendiger. Als moderne Weiterentwicklung gibt es die Dreistoffsprühdüsen, welche neben dem Preßluftstrom zur Zerstäubung ein weiteres Luftführungssystem, das Verstopfungen und Tropfenbildung an der Düse verhindern soll. Im Rahmen des erfindungsgemäßen Verfahrens wird der Einsatz von Zweistoffsprühdüsen, vorzugsweise Zweistoffsprühdüsen mit einer Flüssigkeitsbohrung zwischen 2 und 6 mm, insbesondere zwischen 3 und 5 mm besonders bevorzugt.

Als Losungs- oder Dispersionsmittel für das Bindemittel b) eignen sich neben Wasser selbstverständlich auch organische Lösungsmittel oder Gemische aus Wasser und organischem Lösungsmittel, wobei im Falle eines solchen Gemisches der Gewichtsanteil des organischen Lösungsmittels an dem Gesamtgemisch aus Wasser, organischen Lösungsmittel, Bindemittel b) und möglichen weiteren Inhaltsstoffen vorzugsweise weniger als 20 Gew.-%, bevorzugt weniger als 10 Gew.%, insbesondere bevorzugt weniger als 5 Gew.-% beträgt.

Während der Granulation von Bleichkalalysator, Trägermaterial und Bindemittel wird der Wassergehalt des Granulationsgemisches bezogen auf das Gesamtgewicht des Granulationsgemisches vorzugsweise niedrig gehalten. Bevorzugte erfindungsgemäße Verfahren sind dadurch gekennzeichnet, dass der Wassergehalt des Granulationsgemisches während der Granulation von Bleichkatalysator, Trägermaterial und Bindemittel bezogen auf das Gesamtgewicht des Granulationsgemisches weniger als 15 Gew.%, vorzugsweise weniger als 12 Gew.-%, bevorzugt weniger als 8 Gew.-% und insbesondere weniger als 6 Gew.-% beträgt.

In erfindungsgemäßen Verfahren wird auf das in einem Mischer befindliche Trägermaterial ein separat hergestelltes Gemisch (Lösung oder Suspension), umfassend das Bindemittel, den Bleichkatalysator sowie gegebenenfalls weitere Substanzen wie Lösungsmittel oder Farbstoffe, aufgedüst.
Dem Granulationsgemisch und zur Verbesserung der Rieselfähigkeit nach Aufdüsen des Bindemittels vorzugsweise ein feinteiliges Pudermittel, bevorzugt ein Pudermittel aus der Gruppe Natriumcarbonat, calcinierte Kieselsäure und Fallungskieselsäure, zugesetzt,

Diese Verfahrensweise, bei welcher der Bleichkatalysator und das Bindemittel in einem ersten Schritt miteinander vermischt werden und diese Mischung in einem nachfolgenden zweiten Schritt mit dem Trägermaterial in Kontakt gebracht wird, hat sich insbesondere in Bezug auf die Verarbeitbarkeit, insbesondere die Kompaktierung zu Tabletten, sowie die spätere bleichaktivierende Wirkung als vorteilhaft erwiesen.

Die Verweilzeit des Granulationsgemisches in dem Mischer bzw. Granulator beträgt nach Einsetzen der Bindemittelzugabe vorzugsweise mindestens eine Minute. Bevorzugte erfindungsgemäße Verfahren sind dadurch gekennzeichnet, dass die Verweilzeit des Granulationsgemisches nach dem Eintrag des Bindemittels in den Mischer mindestens 1 Minute, vorzugsweise mindestens 2 Minuten und besonders bevorzugt zwischen 3 und 8 Minuten.

Aufgrund der Verfahrensführung und der speziellen Zusammensetzung erfindungsgemäß hergestellter Bleichaktivatorgranulate ist eine Trocknung oder Kühlung im Anschluss an die Granulation nicht notwendig, weshalb erfindungsgemäß bevorzugte Verfahren dadurch gekennzeichnet sind, dass sich an die Granulation keine Trocknung und/oder keine Kühlung anschließt.

Wie weiter oben ausgeführt, eignen sich die erfindungsgemäß hergestellten Bleichaktivatorgranulate z.B. aufgrund ihres vorteilhaften Entmischungsverhaltens in besonderer Weise zur Vermischung und Kompaktierung mit weiteren Aktivsubstanzen. Erfindungsgemäß bevorzugt werden daher solche Verfahren, bei denen das Bleichaktivatorgranulat nach der Granulation durch Kompaktierung formgebend verarbeitet wird.

Wie bereits erwähnt, zeichnen sich die erfindungsgemäß hergestellte Bleichkatalysatorgranulate außer durch eine verbesserte Herstellbarkeit und Verarbeitbarkeit weiterhin auch durch eine erhöhte Bleichaktivierung aus. Diese verbesserte Leistungsfähigkeit ist insbesondere in Bezug auf die Beseitigung hartnäckiger Anschmutzungen wie beispielsweise Teeanschmutzungen zu beobachten.

## Patentansprüche

1. Verfahren zur Herstellung eines Bleichkatalysatorgranulats, umfassend bezogen auf das Gesamtgewicht des Granulats
a) 0,1 bis 30 Gew.% eines Bleichkatalysators
b) zwischen 40 und 95 Gew.-% eines Trägermaterials
c) 0,1 bis 5 Gew.-% eines Bindemittels aus der Gruppe der organischen Polymere,
bei welchem ein Bleichkatalysator, ein Trägermaterial und ein Bindemittel aus der Gruppe der organischen Polymere in einem Mischer miteinander in Kontakt gebracht und granuliert werden, **dadurch gekennzeichnet, dass**
a) das Trägermaterial in einem Mischer vorgelegt wird, wobei das Trägermaterial mehr als 70 Gew.-% Carbonat(e) und Silikat(e) enthält und das Gewichtsverhältnis von Carbonat zu Silikat im Bereich von 10:1 bis 1:10 liegt und
b) eine Lösung oder eine Suspension, umfassend Bleichkatalysator und Bindemittel, aufgedüst wird.

2. Verfahren nach Anspruch 1, **dadurch gekennzeichnet, dass** der Gewichtsanteil des Bleichkatalysators a) am Gesamtgewicht des Granulats 0,1 bis 20 Gew.-%, vorzugsweise 0,2 bis 10 Gew.-% und insbesondere 0,5 bis 7 Gew.-% beträgt.

3. Verfahren nach einem der vorherigen Ansprüche, **dadurch gekennzeichnet, dass** der Bleichkatalysator a) ausgewählt ist aus der Gruppe der bleichverstärkende Übergangsmetallsalze und Übergangsmetallkomplexe, vorzugsweise der Mn-, Fe-, Co-, Ru - oder Mo-komplexe, besonders bevorzugt aus der Gruppe der Mangan und/oder Cobaltsalze und/oder -komplexe, insbesondere der Cobalt(ammin)-Komplexe, der Cobalt(acetat)-Komplexe, der Cobalt(Carbonyl)-Komplexe, der Chloride des Cobalts oder Mangans, des Mangansulfats und der Komplexe des Mangans mit 1,4,7-trimethyl-1,4,7-triazacyclononan (Me₃-TACN) oder 1,2, 4,7-tetramethyl-1,4,7-triazacyclononan (Me₄-TACN).

4. Verfahren nach einem der vorherigen Ansprüche, **dadurch gekennzeichnet, dass** der Gewichtsanteil des Trägermaterials b) am Gesamtgewicht des Granulats zwischen 60 und 90 Gew.% beträgt.

5. Verfahren nach einem der vorherigen Ansprüche, **dadurch gekennzeichnet, dass** das Trägermaterial zwischen 10 und 90 Gew.%, vorzugsweise zwischen 20 und 80 Gew.-% und insbesondere zwischen 30 und 60 Gew.% Silikat(e) enthält.

6. Verfahren nach einem der vorherigen Ansprüche, **dadurch gekennzeichnet, dass** das Trägermaterial ausschließlich Carbonat(e) und Silikat(e) enthält.

7. Verfahren nach einem der vorherigen Ansprüche, **dadurch gekennzeichnet, dass** der Gewichtsanteil des Bindemittels c) am Gesamtgewicht des Granulats zwischen 0,2 und 4,5 Gew.-%, bevorzugt zwischen 0,5 und 4,0 Gew.-% und insbesondere zwischen 1,0 und 4,0 Gew.-% beträgt.

8. Verfahren nach einem der vorherigen Ansprüche, **dadurch gekennzeichnet, dass** der Gewichtsanteil der Teilchen mit einer Teilchengröße unterhalb 0,1 mm mindestens 4 Gew.-%, vorzugsweise mindestens 6 Gew.-% und insbesondere mindestens 8 Gew.-% beträgt.

9. Verfahren nach einem der vorherigen Ansprüche, **dadurch gekennzeichnet, dass** der Gewichtsanteil der Teilchen mit einer Teilchengröße zwischen 0,2 und 0,8 mm zwischen 30 und 70 Gew.-%, vorzugsweise zwischen 45 und 65 Gew.-% und insbesondere zwischen 40 und 60 Gew.-% beträgt, wobei die Teilchen mit einer Teilchengröße zwischen 0,2 und 0,8 mm vorzugsweise einen Mangangehalt oberhalb 1600 mg/kg, bevorzugt oberhalb 2200 mg/kg und insbesondere oberhalb 2800 mg/kg aufweisen.

10. Verfahren nach einem der vorherigen Ansprüche, **dadurch gekennzeichnet, dass** der Wassergehalt des Granulationsgemisches während der Granulation von Bleichkatalysator, Trägermaterial und Bindemittel bezogen auf das Gesamtgewicht des Granulationsgemisches weniger als 15 Gew.-%, vorzugsweise weniger als 12 Gew.-%, bevorzugt weniger als 8 Gew.% und insbesondere weniger als 6 Gew.-% beträgt.

## Claims

1. A method for producing bleach catalyst granules comprising, relative to the total weight of the granules,
a) 0.1 to 30 wt.% of a bleach catalyst,
b) between 40 and 95 wt.% of a support material,
c) 0.1 to 5 wt.% of a binder from the group of organic polymers,
in which a bleach catalyst, a support material and a binder from the group of organic polymers are brought into contact with one another in a mixer and granulated, **characterised in that**
a) the support material is initially introduced into a mixer, wherein the support material contains more than 70 wt.% of carbonate(s) and silicate(s) and the weight ratio of carbonate to silicate is in the range from 10:1 to 1:10 and
b) a solution or a suspension comprising bleach catalyst and binder is sprayed on.

2. A method according to claim 1, **characterised in that** the proportion by weight of the bleach catalyst a) in the total weight of the granules amounts to 0.1 to 20 wt.%, preferably 0.2 to 10 wt.% and in particular 0.5 to 7 wt.%.

3. A method according to any one of the preceding claims, **characterised in that** the bleach catalyst a) is selected from the group of bleach-boosting transition metal salts and transition metal complexes, preferably of Mn, Fe, Co, Ru or Mo complexes, particularly preferably from the group of manganese and/or cobalt salts and/or complexes, in particular cobalt(ammine) complexes, cobalt (acetate) complexes, cobalt (carbonyl) complexes, the chlorides of cobalt or manganese, manganese sulfate and the complexes of manganese with 1,4,7-trimethyl-1,4,7-triazacyclononane (Me₃-TACN) or 1,2,4,7-tetramethyl-1,4,7-triazacyclononane (Me₄-TACN).

4. A method according to any one of the preceding claims, **characterised in that** the proportion by weight of the support material b) in the total weight of the granules amounts to between 60 and 90 wt.%.

5. A method according to any one of the preceding claims, **characterised in that** the support material contains between 10 and 90 wt.%, preferably between 20 and 80 wt.% and in particular between 30 and 60 wt.% of silicate(s).

6. A method according to any one of the preceding claims, **characterised in that** the support material solely contains carbonate(s) and silicate(s).

7. A method according to any one of the preceding claims, **characterised in that** the proportion by weight of the binder c) in the total weight of the granules amounts to between 0.2 and 4.5 wt.%, preferably between 0.5 and 4.0 wt.% and in particular between 1.0 and 4.0 wt.%.

8. A method according to any one of the preceding claims, **characterised in that** the proportion by weight of the particles with a particle size of below 0.1 mm amounts to at least 4 wt.%, preferably at least 6 wt.% and in particular at least 8 wt.%.

9. A method according to any one of the preceding claims, **characterised in that** the proportion by weight of the particle with a particle size of between 0.2 and 0.8 mm amounts to between 30 and 70 wt.%, preferably between 45 and 65 wt.% and in particular between 40 and 60 wt.%, wherein the particles with a particle size of between 0.2 and 0.8 mm preferably have a manganese content of above 1600 mg/kg, preferably of above 2200 mg/kg and in particular of above 2800 mg/kg.

10. A method according to any one of the preceding claims, **characterised in that** the water content of the granulation mixture during granulation of the bleach catalyst, support material and binder amounts, relative to the total weight of the granulation mixture, to less than 15 wt.%, preferably less than 12 wt.%, preferably less than 8 wt.% and in particular less than 6wt.%.

## Revendications

1. Procédé de préparation d'un granulé de catalyseur de blanchiment, comprenant, rapportés au poids total du granulé :
a) de 0,1 à 30 % en poids d'un catalyseur de blanchiment ;
b) entre 40 et 95 % en poids d'une matière de support ;
c) de 0,1 à 5 % en poids d'un liant choisi parmi le groupe des polymères organiques ;
dans lequel on amène un catalyseur de blanchiment, une matière de support et un liant choisi parmi le groupe des polymères organiques en contact les uns avec les autres dans un dispositif de mélange et on transforme le mélange en granulés, **caractérisé en ce que**
a) on dépose au préalable la matière de support dans un dispositif de mélange, la matière de support contenant à raison de plus de 70 % en poids, un ou plusieurs carbonates et un ou plusieurs silicates, le rapport pondéral du carbonate au silicate se situant dans la plage de 10:1 à 1:10 ; et
b) on y projette une solution ou une suspension comprenant un catalyseur de blanchiment et un liant.

2. Procédé selon la revendication 1, **caractérisé en ce que** la fraction pondérale du catalyseur de blanchiment a) par rapport au poids total du granulé s'élève de 0,1 à 20 % en poids, de préférence de 0,2 à 10 % en poids, et en particulier de 0,5 à 7 % en poids.

3. Procédé selon l'une quelconque des revendications précédentes, **caractérisé en ce que** le catalyseur de blanchiment a) est choisi parmi le groupe des sels de métaux de transition et des complexes de métaux de transition ayant un effet de renforcement de blanchiment, de préférence des complexes de Mn, de Fe, de Co, de Ru ou de Mo, de manière particulièrement préférée parmi le groupe des sels et/ou des complexes du manganèse et/ou du cobalt, en particulier des complexes de cobalt(ammine), des complexes de cobalt(acétate), des complexes de cobalt(carbonyle), des chlorures du cobalt ou du manganèse, du sulfate de manganèse et des complexes du manganèse avec le 1,4,7-triméthyl-1,4,7-triazacyclononane (Me₃-TACN) ou avec le 1,2,4,7-tétraméthyl-1,4,7-triazacyclononane (Me₄-TACN).

4. Procédé selon l'une quelconque des revendications précédentes, **caractérisé en ce que** la fraction pondérale de la matière de support b) par rapport au poids total du granulé se situe entre 60 et 90 % en poids.

5. Procédé selon l'une quelconque des revendications précédentes, **caractérisé en ce que** la matière de support contient lesdits un ou plusieurs silicates entre 10 et 90 % en poids, de préférence entre 20 et 80 % en poids et en particulier entre 30 et 60 % en poids.

6. Procédé selon l'une quelconque des revendications précédentes, **caractérisé en ce que** la matière de support contient exclusivement un ou plusieurs carbonates et un ou plusieurs silicates.

7. Procédé selon l'une quelconque des revendications précédentes, **caractérisé en ce que** la fraction pondérale du liant c) par rapport au poids total du granulé se situe entre 0,2 et 4,5 % en poids, de préférence entre 0,5 et 4,0 % en poids et en particulier entre 1,0 et 4,0 % en poids.

8. Procédé selon l'une quelconque des revendications précédentes, **caractérisé en ce que** la fraction pondérale des particules dont la granulométrie est inférieure à 0,1 mm s'élève à au moins 4 % en poids, de préférence à au moins 6 % en poids et en particulier à au moins 8 % en poids.

9. Procédé selon l'une quelconque des revendications précédentes, **caractérisé en ce que** la fraction pondérale des particules dont la granulométrie se situe entre 0,2 et 0,8 mm, s'élève entre 30 et 70 % en poids, de préférence entre 45 et 65 % en poids, et en particulier entre 40 et 60 % en poids, les particules dont la granulométrie se situe entre 0,2 et 0,8 mm présentant de préférence une teneur en manganèse supérieure à 1600 mg/kg, de préférence supérieure à 2200 mg/kg, et en particulier supérieure à 2800 mg/kg.

10. Procédé selon l'une quelconque des revendications précédentes, **caractérisé en ce que** la teneur en eau du mélange de granulation au cours de la granulation du catalyseur de blanchiment, de la matière de support et du liant, par rapport au poids total du mélange de granulation, est inférieure à 15 % en poids, de préférence inférieure à 12 % en poids, de manière préférée inférieure à 8 % en poids et en particulier inférieure à 6 % en poids.
